# EUROPEAN PATENT SPECIFICATION

(11) **EP 2 605 364 B1**
(45) Date of publication and mention of the grant of the patent: **04.11.2026**
(21) Application number: 12187132.1
(22) Date of filing: 03.10.2012
(51) Int. Cl.: H02J 7/14

(54) **Battery pack**
Batteriepack
Bloc-batterie

(30) Priority: 16.12.2011 US 201161576622 P; 14.09.2012 US 201213620434
(43) Date of publication of application: 19.06.2013
(73) Proprietor: Samsung SDI Co., Ltd., Yongin-si, Gyeonggi-do (KR)
(72) Inventor: Ju, Ri-A, Gyeonggi-do (KR)
(74) Representative: Marks & Clerk LLP

(56) References cited:
- WO-A1-2011/069162
- JP-A- 2011 229 353
- US-A1- 2010 201 318
- US-A1- 2010 225 276
- US-A1- 2011 043 170
- US-A1- 2011 227 540
- US-B1- 7 683 585
- US-B2- 7 533 746

## Description

### Field of the Invention

The present invention relates to a battery pack.

### Background to the Invention

Unlike primary batteries, secondary batteries may be charged and discharged. A secondary battery is used in the form of a single battery or a plurality of secondary batteries are connected to form a single battery module, depending on the type of an applied external device.

Typically, a lead storage battery is used as a power supply for starting up an engine. Recently, an idle stop & go (ISG) system for improving fuel efficiency has been increasingly used. In a power supply for supporting an ISG system for restricting a no-load operation, the discharge properties of the power supply need to be maintained and a long lifetime of the power supply needs to be ensured. However, since an engine is repeatedly stopped and started up under an ISG system, the charge and discharge properties of the lead storage battery may deteriorate and the lead storage battery may not be used for a long period of time.

The present invention aims to provide a battery pack having charging and discharging properties which deteriorate less over time and which has a longer lifetime.

The present invention provides a battery pack that may be used in a power supplier of an idle stop & go (ISG) system, and a power supplier including the battery pack.

WO 2011/069162 A1 discloses battery with an integrated power management system and scalable cutoff component, the battery system including a battery housing with first and second voltage output terminals, a plurality of rechargeable battery cells within the battery housing and having first and second voltage terminals; a power management system for generating an external control signal and an internal control signal based upon monitored operating parameters of the plurality of rechargeable battery cells, said external control signal for controlling an external power source and/or an external load, said power management system forming an integral part of the battery system; and a cutoff switch circuit within the battery housing and for making and breaking a conductive path between the first voltage terminal of the plurality of battery cells and the first voltage output terminal of the battery housing in response the internal control signal from the battery management system.

US 2011/0227540 A1 discloses a direct-current power source apparatus in which a lithium-ion capacitor unit is used as an electric storage system and which can fully utilize the lithium-ion capacitor unit and maintain the supply of electricity to a load.

### Summary of the Invention

Accordingly, the present invention provides a battery pack according to claim 1. Preferred features of the invention are set out in claim 2.

According to one or more embodiments of the present invention, a battery pack includes a battery unit that is connected between first and second terminals, receives charging power, and outputs discharging power; and a power converter that is connected between a first terminal and the battery unit and converts a voltage of the first terminal into a predetermined voltage of the battery unit.

For example, the power converter may be a direct current-direct current (DC-DC) converter.

For example, the first and second terminals may be connected in parallel to a generating module and a starter motor.

For example, the starter motor may provide starting power for starting up an engine from discharging power supplied through the first and second terminals.

For example, the generating module may convert mechanical energy into electrical energy during an operation of the engine and may supply charging power to through the first and second terminals.

For example, the battery pack may further include a first current limiter that is connected in parallel to the power converter between the first terminal and the battery unit and limits charging power.

For example, the first current limiter may be formed on a discharging path for bypassing the power converter.

For example, the first current limiter may include a diode that that allows discharging power to have a forward direction and allows charging power to have a reverse direction.

For example, the battery pack may further include a second current limiter that is connected in series between the first terminal and the battery unit and limits charging power.

For example, the second current limiter may be connected between the power converter and the battery unit.

For example, the second current limiter may include a resistance device.

For example, the battery unit may include a plurality of parallel modules that are connected in series, wherein each of the parallel modules may include a plurality of battery cells that are connected in parallel.

For example, the battery unit may include three parallel modules that are connected in series, wherein the each of the parallel modules may include five battery cells that are connected in parallel.

For example, the battery pack may further include a bus bar that extends across first and second electrodes of each of the battery cells and connects the battery cells in series and in parallel.

For example, the bus bar may include a first bus bar extending across first electrodes of the first parallel module; a second bus bar extending second electrodes of the first parallel module and first electrodes of the second parallel module; a third bus bar extending across second electrodes of the second parallel module and first electrodes of the third parallel module; and a fourth bus bar extending across second electrodes of the third parallel module.

For example, the battery pack may further include a connecting terminal that is electrically connected to the bus bar connected to the first and second electrodes of each of the parallel modules and is exposed outside the battery pack.

For example, the connecting terminal may include a first connecting terminal, a second connecting terminal, a third connecting terminal, and a fourth connecting terminal, which are electrically connected to the first bus bar, the second bus bar, the third bus bar, and the fourth bus bar, respectively.

For example, the parallel modules may include a restrainer formed to surround one end portion and both lateral surfaces of the battery cells; and an end plate disposed at the other end portion of the battery cell and coupled to the restrainer.

For example, the battery pack may further include a base plate on which a position aligning unit for guiding an assembly position of the parallel modules is formed.

For example, the position aligning unit may be formed to isolate neighboring parallel modules from each other with an isolation gap.

According to the present invention, the battery pack has improved charging and discharging properties and a long lifetime. Thus, the battery pack may be appropriately applied to a power supplier for starting up an engine under an idle stop & go (ISG) system.

In particular, according to one of more embodiments of the present invention, the battery pack is designed according to an input/output specification so as to satisfy a voltage level required by a starter motor or other electrical components in order to obtain a voltage level or to start up an engine of a conventional generating module, and thus the battery pack replaces a conventional lead storage battery by using a conventional power system.

### Brief Description of the Drawings

FIG. 1 is a diagram of schematic structure of a battery pack according to an embodiment of the present invention;
FIG. 2 shows a schematic structure of a battery pack according to another embodiment of the present invention;
FIG. 3 shows a schematic structure of a battery pack according to another embodiment of the present invention;
FIGS. 4 through 6 show schematic structures of battery packs according to other embodiments of the present invention;
FIG. 7 is an exploded perspective view of a battery pack according to another embodiment of the present invention;
FIG. 8 is an exploded perspective view of the battery unit of FIG. 7 in detail;
FIG. 9 shows a first parallel module shown in FIG. 8 in detail, according to an embodiment of the present invention; and
FIGS. 10 and 11 are graphs for showing experiment results obtained by evaluating charging properties before and after an engine is started when a battery pack is used, according to an embodiment of the present invention.

### Description of Embodiments

Hereinafter, a battery pack will be described with regard to embodiments of the invention with reference to the attached drawings.

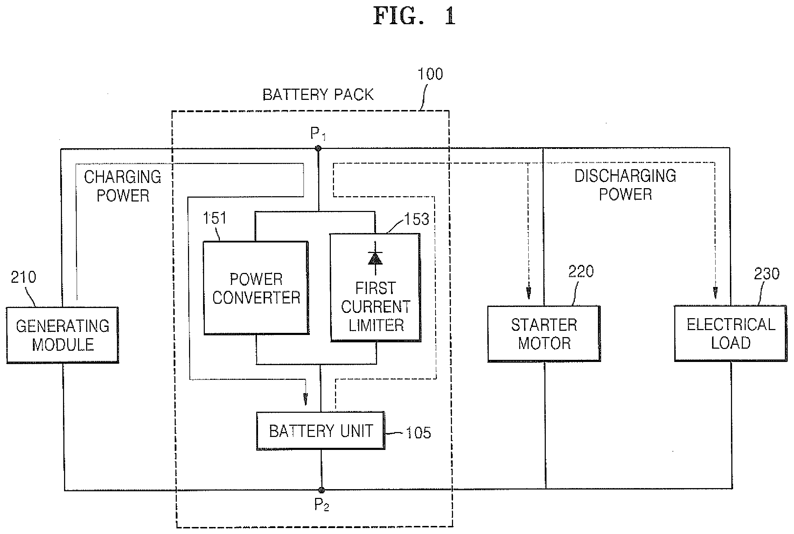

FIG. 1 is a diagram of schematic structure of a battery pack 100 according to an embodiment and shows a case where the battery pack 100 is connected to an external peripheral device.

The battery pack 100 is connected to first and second terminals P1 and P2, and includes a battery unit 105 between the first and second terminals P1 and P2, for receiving charging power, and for outputting discharging power. The battery pack 100 is electrically connected to a generating module 210 and a starter motor 220 in parallel through the first and second terminals P1 and P2.

The battery pack 100 stores charging power generated by the generating module 210 and supplies discharging power to the starter motor 220. For example, the generating module 210 may be power-connected to an engine (not shown) and may be connected to an operational axis of the engine so as to convert rotational power into electrical output. In this case, the charging power generated from the generating module 210 is stored in the battery unit 105 through the first and second terminals P1 and P2 of the battery pack 100. For example, the generating module 210 may include a direct current (DC) generator (not shown), an alternating current (AC) generator (not shown), a rectifier (not shown), and the like, and typically generates a DC voltage of about 15V, more particularly, a DC voltage of about 14.6 V to about 14.8 V.

For example, the starter motor 220 may be operated when the engine is started up and provide initial rotational power for rotating the rotational axis of the engine. For example, the starter motor 220 receives the stored power through the first and second terminals P1 and P2 of the battery pack 100 and rotates the rotational axis when the engine is started up or is started up again after idle stop so as to start up the engine again. The starter motor 220 is operated when the engine is started-up. During an operation of the engine that is initiated by the starter motor 220, the generating module 210 may be driven so as to generate charging power.

For example, the battery pack 100 may act as a power supply for starting up the engine of the ISG system having an ISG function for improving fuel efficiency. As the engine of the ISG system is repeatedly stopped started up, the battery pack 100 is repeatedly charged and discharged.

Since a lead storage battery applied to a typical ISG system is repeatedly charged and discharged, a service life of the lead storage battery may be reduced and the charging and discharging properties of the lead storage battery may deteriorate. For example, the lead storage battery is repeatedly charged and discharged, start capability of the engine may deteriorate and it may be necessary to replace the lead storage battery frequently.

For example, the battery unit 105 preferably includes a lithium ion battery that has charging and discharging properties that are maintained relatively constant and hardly deteriorate along with service time, compared to a lead storage battery. Therefore, the battery unit 105 can be appropriately applied to the ISG system whose engine is repeatedly stopped and started up. The battery unit 105 may have a low weight and improved fuel efficiency, compared to a lead storage battery having the same discharge capacity. In addition, the battery unit 105 may have a smaller volume than that of a lead storage battery with the same charging capacity, thereby reducing a loading space. However, the battery unit 105 is not limited to a lithium ion battery and may be, for example, a nickel metal hydride battery (NiMH) or the like.

An electrical load 230 may be connected to the battery pack 100, together with the generating module 210 and the starter motor 220. The electrical load 230 may consume power stored in the battery pack 100, receive stored discharge power through the first and second terminals P1 and P2, and include various electrical components.

The battery pack 100 includes a power converter 151 for converting the charging power supplied from the generating module 210 to have a voltage level required by the battery unit 105. The power converter 151 is formed on a charging path between the first terminal P1 and the battery unit 105 and converts a voltage of the first terminal P1 into a voltage level, particularly, a rated charging voltage required by the battery unit 105. Throughout this specification, a predetermined voltage of the battery unit 105, a voltage level required by the battery unit 105, or a predetermined voltage set by the battery unit 105 may refer to a rated charging voltage of the battery unit 105.

The power converter 151 may be embodied as a buck-type converter and may include, for example, an inductor, a capacitor, a diode, a switch device, or the like.

For example, when a DC voltage level output from the generating module 210 is from about 14.6 V to about 14.8 V and a DC rated charging voltage of the battery unit 105 is about 12.6 V, the power converter 151 DC-DC converts a DC voltage of about 14.6 V to about 14.8 to a DC voltage of about 12.6 V and supplies the converted power to the battery unit 105. A voltage band output from the generating module 210 is converted into a voltage level required by the battery unit 105 through the power converter 151, and thus a conventional generating module may be used without being redesigned. By setting a voltage of the battery unit 105 to 12.6 V, a voltage band required by the starter motor 220 or the electrical load 230 may be satisfied to about 12 V.

The battery unit 105 may include a plurality of battery cells (not shown) that are connected in series or in parallel and a rate charging voltage and a charging capacity may be adjusted by combining serial and parallel connections. For example, the battery unit 105 may be set to have a voltage of 12.6 V by connecting a plurality of battery cells in series or in parallel. As described below, the battery unit 105 may be configured such that three parallel modules each having a voltage of 4.2 V are connected in series and thus have a voltage of 12.6 V.

The rated charging battery of the battery unit 105 may be set to be lower than a voltage level output from the generating module 210, that is, a voltage of the first terminal P1. This is because the battery unit 105 is fully charged from charging power output from the generating module 210 and a charging capacity of about 100% is used.

For example, when the battery unit 105 is set to have a voltage of 16.8 V by connecting four parallel modules having a voltage of 4.2 V in parallel, since a voltage of 16.8 V is higher than a voltage of 15 V output from the generating module 210, only about 50% of a charging capacity of the battery unit 105 is used. As described above, when four parallel modules are connected in series, charging efficiency of the battery unit 105 is reduced. In addition, since the number of batteries is increased, manufacturing costs are increased and fuel efficiency is reduced due to a high weight of the batteries. According to the present invention, a product can be manufactured by connecting three parallel modules in series.

The battery pack 100 may further include a first current limiter 153 that is connected in parallel to the power converter 151 between the first terminal P1 and the battery unit 105. The first current limiter 153 blocks or limits charging power supplied to the battery unit 105. In addition, discharging power of the battery unit 105 by-passes the power converter 151 to supply the discharging power to the starter motor 220 and/or the electrical load 230.

The first current limiter 153 includes a diode that allows discharging power supplied from the battery unit 105 to have a forward direction and allows charging power stored in the battery unit 105 to have a reverse direction. For example, the first current limiter 153 may include a plurality of diodes that are connected in parallel to each other, thereby reducing a voltage drop in discharging power passing through the first current limiter 153.

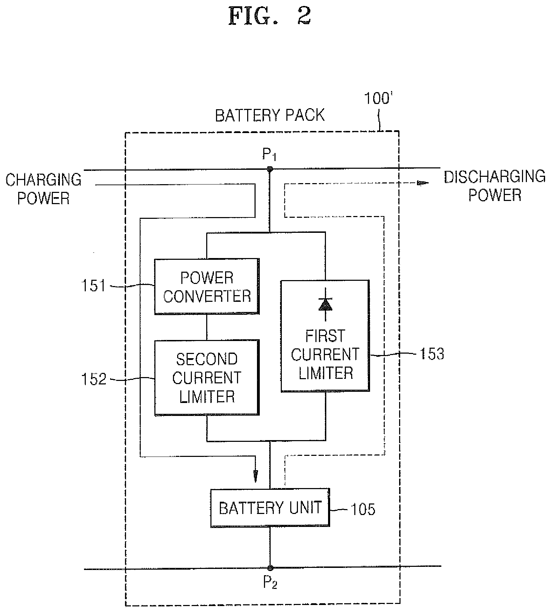

FIG. 2 shows a schematic structure of a battery pack 100' according to another embodiment of the present invention. As shown in FIG. 2, a second current limiter 152 is connected in series between the first terminal P1 and the battery unit 105. In more detail, the second current limiter 152 is connected between the power converter 151 and the battery unit 105.

The second current limiter 152 limits a charging current supplied to the battery unit 105 to be equal to or less than a predetermined level. If an excessive amount of charging current instantly flows to the battery unit 105 or the power converter 151, the battery unit 105 or the power converter 151 may malfunction or a protective device (not shown) of the power converter 151 itself may operate so that a charging operation may be stopped. For example, the second current limiter 152 may include a resistance device. According to another embodiment of the present invention, the second current limiter 152 may maintain a charging current to a constant level so as to charge the battery unit 105 by using a constant current charging method.

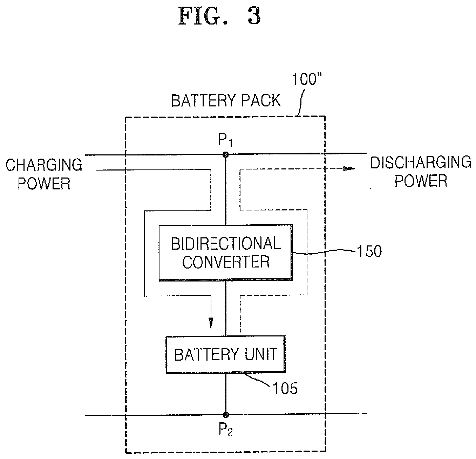

FIG. 3 shows a schematic structure of a battery pack 100" according to another embodiment of the present invention. As shown in FIG. 3, a bidirectional converter 150 is connected between the first terminal P1 and the battery unit 105. The bidirectional converter 150 DC-DC converts a charging voltage applied to the battery unit 105, that is, a voltage of the first terminal P1 into a voltage level required by the battery unit 105. On the other hand, the bidirectional converter 150 DC-DC converts discharging power output from the battery unit 105 to a voltage of the first terminal P1. According to the present embodiment, both charging power and discharging power are converted through the bidirectional converter 150. However, the bidirectional converter 150 may be configured such that a charging path and a discharging path are separated from each other through an internal circuit, for example, a switch device or the like.

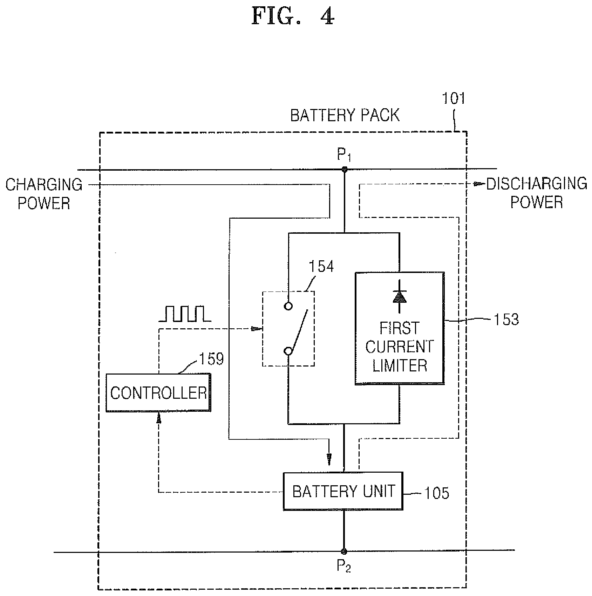

FIG. 4 shows a schematic structure of a battery pack 101 according to another embodiment of the present invention. As shown in FIG. 4, a charging switch unit 154 is connected in series between the first terminal P1 and the battery unit 105.

The charging switch unit 154 opens and closes a charging path of the battery unit 105. For example, the charging switch unit 154 includes a power switch such as a bipolar junction transistor (BJT), a metal oxide semiconductor field effect transistor (MOSFET), an insulated gate bipolar transistor (IGBT), a relay, an open/close apparatus, or the like.

The charging switch unit 154 operates based on a voltage of the battery unit 105 or a charge state such as a state of charge (SOC) and opens or closes the charging path according to a pulse width modulation (PWM) control signal having alternate on/off sections. Charging power charged in the battery unit 105 may be controlled in real time by adaptively controlling a duty ratio, for example, a ratio of 'on' sections per period of the PWM control signal applied to the charging switch unit 154 according to the charge state of the battery unit 105.

For example, as a charge level of the battery unit 105 increases, the duty ratio of the PWM control signal is continually reduced. Lastly, when the battery unit 105 reaches a full-charge state, for example, when the voltage of the battery unit 105 reaches a predetermined maximum voltage, the charging switch unit 154 may be switched off so as to prevent the battery unit 105 from being overcharged and to protect the battery unit 105. For example, as the charge level of the battery unit 105 increases, the duty ratio of the PWM control signal applied to the charging switch unit 154 is continually reduced and lastly approaches 0, and thus, the charging switch unit 154 is maintained in an off state. The charging power is gradually reduced according to the charging level of the battery unit 105, and thus, a discontinuous change in a power flow, which occurs momentarily when the charging switch unit 154 is switched off, for example, ripple voltage or ripple current is prevented. Accordingly, various electrical components inside the battery pack 101 are protected.

The battery pack 101 of FIG. 4 further includes a controller 159. The controller 159 controls a charging operation of the battery unit 105 by monitoring the voltage of the battery unit 105 or the charge state of the battery unit 105, such as a SOC, generating a PWM control signal of which a duty ratio is adjusted according to the monitoring result, and outputting the PWM control signal.

In FIG. 4, the battery unit 105 is prevented from being overcharged by adaptively controlling charging power according to the charge state of the battery unit 105 by using the charging switch unit 154 that has a relatively simple structure and does not use a separate power converter. In addition, the battery unit 105 can be rapidly charged without being affected by the behavior characteristics, such as charge delay of a power converter by omitting the power converter from a charging path of the battery unit 105.

The first current limiter 153 that is connected in parallel to the charging switch unit 154 is disposed between the first terminal P1 and the battery unit 105. The first current limiter 153 blocks or limits charging power stored in the battery unit 105. In addition, discharging power of the battery unit 105 by-passes the charging switch unit 154 to supply the discharging power to the starter motor 220 and/or the electrical load 230.

The first current limiter 153 includes a diode that allows discharging power supplied from the battery unit 105 to have a forward direction and allows charging power stored in the battery unit 105 to have a reverse direction. For example, the first current limiter 153 may include a plurality of diodes that are connected in parallel to each other, thereby reducing a voltage drop in discharging power passing through the first current limiter 153.

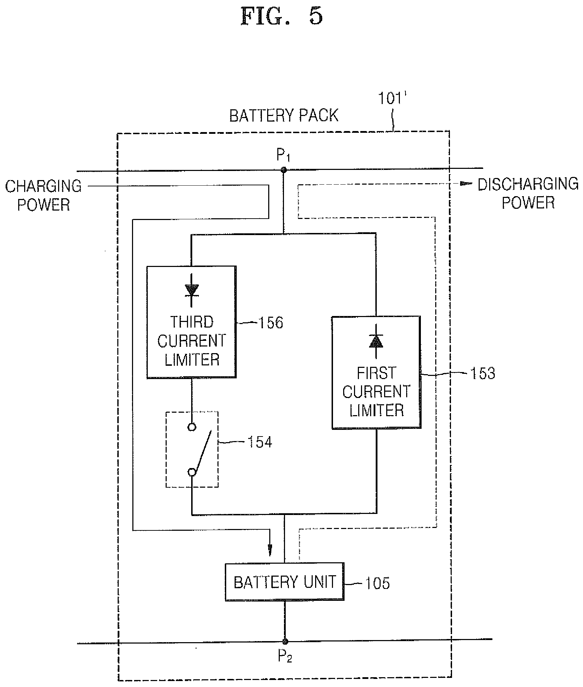

FIG. 5 shows a schematic structure of a battery pack 101' according to another embodiment of the present invention. As shown in FIG. 5, a third current limiter 156 is connected between the first terminal P1 and the battery unit 105. In more detail, the third current limiter 156 is connected in series between the first terminal P1 and the charging switch unit 154.

The third current limiter 156 blocks or limits discharging power supplied from the battery unit 105 on a charging path of the battery unit 105 and passes charging power stored in the battery unit 105.

The third current limiter 156 includes a diode that allows the charging power stored in the battery unit 105 to have a forward direction and allows the discharging power supplied from the battery unit 105 to have a reverse direction.

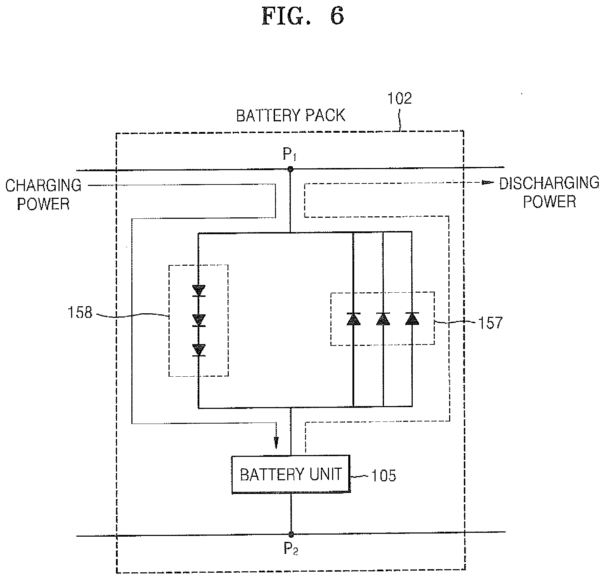

FIG. 6 shows a schematic structure of a battery pack 102 according to the present invention. As shown in FIG. 6, the battery pack 102 includes fourth and fifth current limiters 157 and 158 that are connected in parallel to each other between the first terminal P1 and the battery unit 105. The fourth and fifth current limiters 157 and 158 limit currents on charging and discharging paths of the battery unit 105, respectively.

The fourth current limiter 157 blocks or limits the charging power stored in the battery unit 105 on the discharging path of the battery unit 105. In addition, discharging power of the battery unit 105 by-passes the fifth current limiter 158 to supply the discharging power to the starter motor 220 and/or the electrical load 230. The fourth current limiter 157 includes a diode that allows discharging power supplied from the battery unit 105 to have a forward direction and allows charging power stored in the battery unit 105 to have a reverse direction. For example, the fourth current limiter 157 may include a plurality of diodes that are connected in parallel to each other, thereby reducing a voltage drop in discharging power passing through the fourth current limiter 157.

The fifth current limiter 158 blocks or limits the discharging power supplied from the battery unit 105 on the charging path of the battery unit 105. In addition, charging power stored in the battery unit 105 by-passes the fourth current limiter 157 to supply the charging power to the battery unit 105. The fifth current limiter 158 includes a diode that allows charging power stored in the battery unit 105 to have a forward direction and allows discharging power supplied from the battery unit 105 to have a reverse direction. The fifth current limiter 158 may include a plurality of diodes that are connected in series to each other. Thus, the diodes may reduce a voltage drop in charging power passing through the fifth current limiter 158 and convert a voltage applied from the generating module 210 into a voltage level required by the battery unit 105. For example, when the fifth current limiter 158 includes a plurality of diodes that are connected in series to each other, an appropriate number of diodes may be connected in series to each other so as to cause a voltage drop by as much as a voltage difference between a voltage (e.g., about DC 14.6 V to about 14.8 V) applied from the generating module 210 and a voltage (e.g., about DC 12.6 V) required by the battery unit 105.

In FIG. 6, the battery unit 105 is prevented from being overcharged by causing a voltage drop by using a diode having a relatively simple structure without a power converter on a charging path.

A discontinuous change in a power flow, which occurs due to conversion between on/off states of a switch device, for example, ripple voltage or ripple current is prevented by omitting the switch device from the charging path of the battery unit 105, thereby protecting various electrical components inside the battery pack 102 and ensuring long lifetime of the battery pack 102.

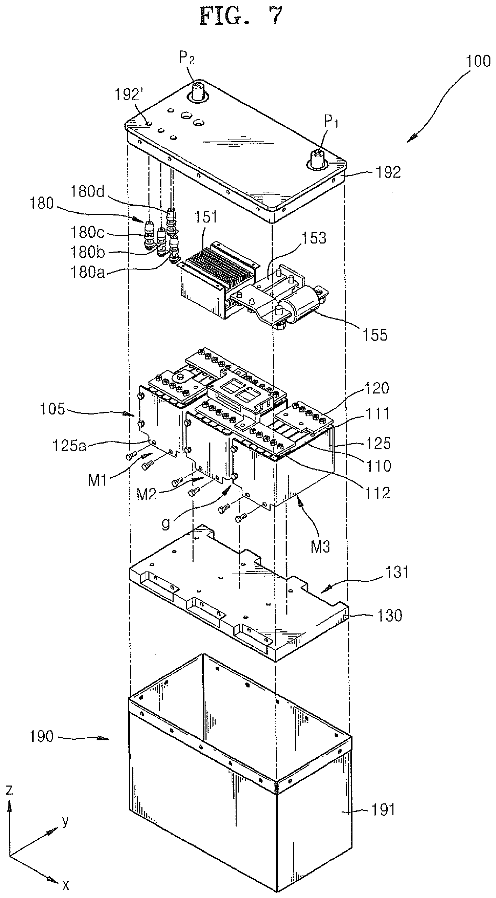

FIG. 7 is an exploded perspective view of a battery pack 100 according to another embodiment of the present invention. As shown in FIG. 7, the battery pack 100 includes the battery unit 105 for performing charging and discharging operations, and a battery housing 190 for housing the battery unit 105 and forming an outer appearance.

The battery unit 105 includes a plurality of battery cells 110 that are arranged in rows, and a bus bar 120 for connecting the battery cells 110 in series and in parallel. The bus bar 120 extends across the battery cells 110 and is connected to first and second electrodes 111 and 112 of the battery cells 110. The battery cells 110 each have a secondary battery such as lithium ion battery and may have, for example, an approximately rectangular shape.

For example, the battery unit 105 may include a plurality of parallel modules M1, M2, and M3 that are arranged in a direction (x-axis direction) in which the battery cells 110 are arranged. The parallel modules M1, M2, and M3 each include the battery cells 110 that are connected in parallel. In addition, by connecting a predetermined number of the parallel modules M1, M2, and M3 in series, a voltage of the battery unit 105 may be obtained as a required level. For example, the battery unit 105 may include three parallel modules M1, M2, and M3 each having a voltage of 4.2 V. The parallel modules M1, M2, and M3 may be connected in series, and thus a voltage of the battery unit 105 is obtained as about 12.6 V.

The parallel modules M1, M2, and M3 are assembled by being respectively inserted into position aligning units 131 disposed on a base frame 130. The base frame 130 supports the parallel modules M1, M2, and M3 and defines assembly positions of the parallel modules M1, M2, and M3. The base frame 130 allows the parallel modules M1, M2, and M3 to be coupled with each other to constitute a module. The base frame 130 also serves as a heat dissipating plate for dissipating heat generated during charging and discharging of the battery cells 110 constituting the parallel modules M1, M2, and M3. With regard to the assembly positions of the parallel modules M1, M2, and M3, the parallel modules M1, M2, and M3 are assembled and spaced apart from each other with a isolation gap 'g'. That is, the parallel modules M1, M2, and M3 are assembled and spaced apart from each other with the isolation gap 'g' in the direction (x-axis direction) in which the battery cells 110 are arranged. In addition, the isolation gap 'g' prevents the parallel modules M1, M2, and M3 from being thermally interfered with each other.

The position aligning units 131 of the base frame 130 are each formed to have a groove shape. Corresponding units 125a of the parallel modules M1, M2, and M3 are inserted into the position aligning units 131, respectively. As described later, the parallel modules M1, M2, and M3 include restrainers 125 for surrounding arrays of the battery cells 110, respectively. Sides of the restrainers 125 protrude downward to form the corresponding units 125a.

The battery housing 190 for housing the battery unit 105 includes a case 191 for housing the battery unit 105 and a cover member 192. An upper opening of the case 191 housing the battery unit 105 is covered by the cover member 192, thereby forming a sealing space of the battery unit 105 that is insulated from an external environment.

The first and second terminals P1 and P2 providing electrical contact points with an external peripheral device are formed on the battery housing 190. The first and second terminals P1 and P2 are formed through the cover member 192 and are electrically connected to the battery unit 105. As described with reference to FIG. 1, the generating module 210, the starter motor 220, the electrical load 230, and the like as peripheral devices of the battery pack 100 may be connected to the first and second terminals P1 and P2.

The first and second terminals P1 and P2 are electrically connected to the battery unit 105 through the power converter 151 or the first current limiter 153 that is disposed on the battery unit 105 upward (z-axis direction). Charging power that is supplied through the first and second terminals P1 and P2 is supplied to the battery unit 105 through the power converter 151. Discharging power output from the battery unit 105 is supplied outside through the first current limiter 153 and the first and second terminals P1 and P2. The power converter 151 and the first current limiter 153 are disposed on the battery unit 105 and are housed in a space of the battery housing 190, which is obtained on the battery unit 105.

A safety device 155 is disposed on the battery unit 105. For example, the safety device 155 limits or blocks charging and discharging currents during malfunction such as overheating, an excessive current, or the like. The safety device 155 may include a positive temperature coefficient (PTC), a fuse, a current blocking device, or the like.

A connecting terminal 180 is disposed on the battery unit 105. The connecting terminal 180 is electrically connected to two ends of each of the parallel modules M1, M2, and M3 so as to measure a voltage of each of the parallel modules M1, M2, and M3 or may be connected to an external charger (not shown) so as to supply charging power directly to the parallel modules M1, M2, and M3. The connecting terminal 180 includes four connecting terminals for measuring a first voltage between two ends of the first parallel module M1, a second voltage between two ends of the second parallel module M2, and a third voltage between two ends of the third parallel module M3, that is, a first connecting terminal 180a, a second connecting terminal 180b, a third connecting terminal 180c, and a fourth connecting terminal 180d. The connecting terminal 180 is formed to be exposed to an outside through a through hole 192' formed in the battery housing 190, in particularly, in the cover member 192.

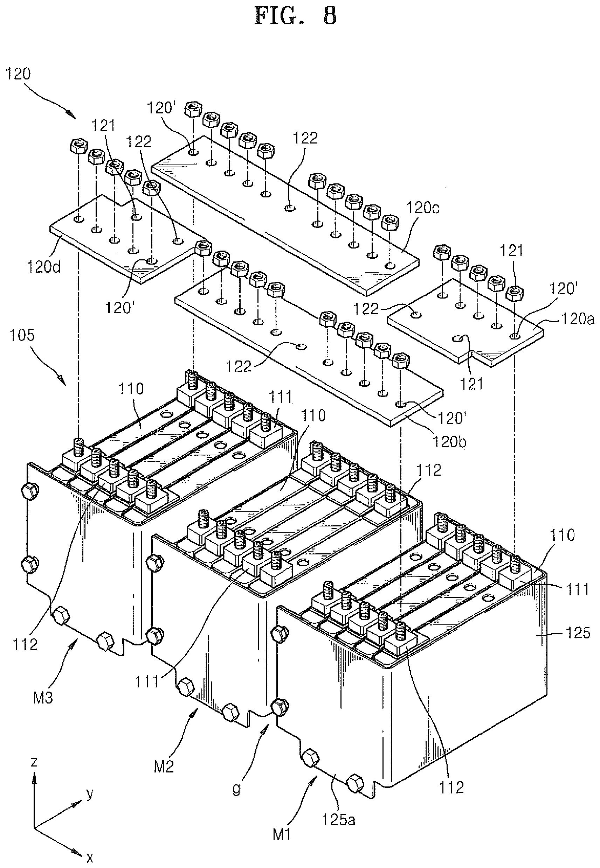

FIG. 8 shows the battery unit 105 of FIG. 7 in detail. As shown in FIG. 8, the battery unit 105 includes the parallel modules M1, M2, and M3 that are electrically connected through the bus bar 120 and has a connection structure including parallel and series connections. The battery unit 105 includes three parallel modules M1, M2, and M3 that are connected in series. In this case, the parallel modules M1, M2, and M3 include five battery cells 110 and the battery cells 110 are connected in parallel. However, according to the present invention, the number of the battery cells 110 constituting the parallel modules M1, M2, and M3 is not limited to this. For example, three or more battery cells 110 may be used.

The bus bar 120 connects the battery cells 110 in series and in parallel. The bus bar 120 extends across upper portions of the battery cells 110 in the direction (x-axis direction) in which the battery cells 110 are arranged so as to electrically connect the first and second electrodes 111 and 112 of the battery cells 110 to each other. The bus bar 120 is inserted into the first and second electrodes 111 and 112 through a coupling hole 120' and is fixed onto the first and second electrodes 111 and 112 through a first connecting portion 121 coupled to screw portions of the first and second electrodes 111 and 112.

Each of the battery cells 110 include the first and second electrodes 111 and 112 having opposite polarities to each other. The first and second electrodes 111 and 112 provide electrical connection for withdrawing discharging power stored in the battery cells 110 or receiving charging power supplied from an outside. Although not illustrated in diagrams, the battery cells 110 accommodate an electrode assembly having a stack structure including a positive electrode plate, a negative electrode plate that are connected to the first and second electrodes 111 and 112, and a separator interposed therebetween, or an electrode assembly having a roll shape obtained winding a positive electrode plate, a negative electrode plate that are connected to the first and second electrodes 111 and 112, and a separator in the form of jelly roll.

The battery cells 110 are arranged such that one group and another neighboring group of the battery cells 110 constituting the parallel modules M1, M2, and M3 have patterns that are reversed in a right and left direction (y-axis direction). For example, one group of the battery cells 110 constituting the first parallel module M1, and another group of the battery cells 110 constituting the second parallel module M2 may have patterns that are reversed in a right and left direction (y-axis direction). Thus, the first and second electrodes 111 and 112 of the first parallel module M1, and the first and second electrodes 111 and 112 of the second parallel module M2 are formed at positions that are reversed in a right and left direction (y-axis direction).

As such, one group of the battery cells 110 constituting the second parallel module M2 and another group of the battery cells 110 constituting the third parallel module M3 are arranged to have patterns that are reversed in a right and left direction (y-axis direction). In addition, the first and second electrodes 111 and 112 of the second parallel module M2, and the first and second electrodes 111 and 112 of the third parallel module M3 may be formed at positions that are reversed in a right and left direction (y-axis direction).

One group and another neighboring group of the battery cells 110 of the parallel modules M1, M2, and M3 are arranged to have patterns that are reversed in a right and left directions (y-axis direction) so that one group and another neighboring group of the parallel modules M1, M2, and M3 may be connected in series through the bus bar 120 extending in one direction.

The bus bar 120 includes a plurality of bus bars 120a, 120b, 120c, and 120d for connecting the first through third parallel modules M1, M2, and M3 in series and in parallel. In more detail, the bus bar 120 includes a first bus bar 120a that extends across first electrodes 111 of the first parallel module M1, a second bus bar 120b that extends across second electrodes 112 of the first parallel module M1 and the first electrodes 111 of the second parallel module M2, a third bus bar 120c that extends across the second electrodes 112 of the second parallel module M2 and the first electrodes 111 of the third parallel module M3, and a fourth bus bar 120d that extends across the second electrodes 112 of the third parallel module M3.

The second bus bar 120b connects the second electrodes 112 of the first parallel module M1 in parallel and connects the first electrodes 111 of the second parallel module M2 in parallel. Simultaneously, the second bus bar 120b connects the first parallel module M1 and the second parallel module M2 in series.

Similarly, the third bus bar 120c connects the second electrodes 112 of the second parallel module M2 in parallel and connects the first electrodes 111 of the third parallel module M3 in parallel. Simultaneously, the third bus bar 120c connects the third parallel module M3 of the second parallel module M2 in series.

The first bus bar 120a and the fourth bus bar 120d form a potential between two ends of the entire battery unit 105. A wiring (not shown) for performing a wiring function of charging and discharging power may be connected the first connecting portion 121 formed in each of the first bus bar 120a and the fourth bus bar 120d. The first connecting portion 121 is formed as a hole. A wiring terminal (not shown) having an O-ring may be connected to the first connecting portion 121 having a hole shape through a coupling member (not shown).

A second connecting portion 122 is formed in each of the first through fourth bus bars 120a, 120b, 120c, and 120d. A wiring (not shown) for connecting first through fourth connecting terminals 180a, 180b, 180c, and 180d (refer to FIG. 7) may be connected to the second connecting portion 122. The second connecting portion 122 is formed to have a hole shape. A wiring terminal (not shown) having an O-shape may be connected to the second connecting portion 122 having a hole shape through a coupling member (not shown).

As described with reference to FIG. 7, the first through fourth connecting terminals 180a, 180b, 180c, and 180d measure a voltage of each of the parallel modules M1, M2, and M3 or supply charging power directly to each of the parallel modules M1, M2, and M3.

The first through fourth connecting terminals 180a, 180b, 180c, and 180d are electrically connected to the bus bars 120a, 120b, 120c, and 120d through the second connecting portion 122 of the first through fourth bus bars 120a, 120b, 120c, and 120d. In order to measure a voltage of the second parallel module M2 or independently charge the second parallel module M2, a voltage between the second and third bus bars 120b and 120c, which corresponds to a potential between two ends of the second parallel module M2 is measured or charging power may be supplied through the second and third bus bars 120b and 120c.

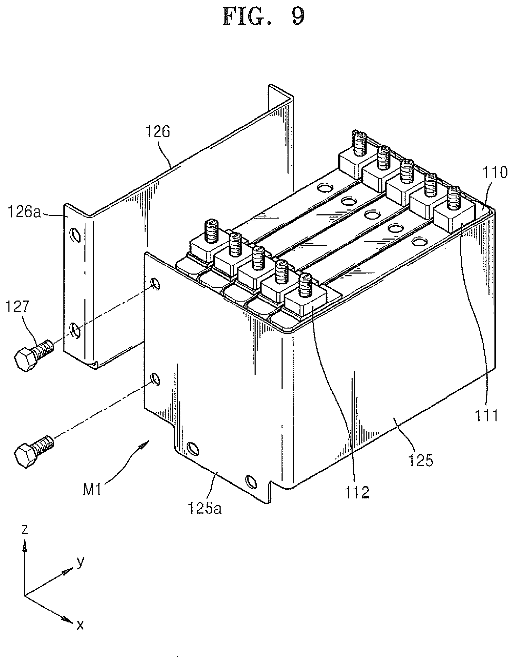

FIG. 9 shows the first parallel module M1 shown in FIG. 8 in detail, according to an embodiment of the present invention. For reference, technical features that will be described with reference to FIG. 9 may be applied to the second and third parallel modules M2 and M2 as well as to the first parallel module M1.

As shown in FIG. 9, the first parallel module M1 includes a restrainer 125 that is disposed to surround the battery cells 110 that are arranged in a row, and an end plate 126 coupled to the restrainer 125.

The restrainer 125 is formed to surround one end portion and both lateral surfaces of the battery cells 110 that are arranged in a row, in the direction (x-axis direction) in which the battery cells 110 are arranged. In addition, the end plate 126 is disposed at the other end portion in the direction (x-axis direction) and the end plate 126 is coupled to the restrainer 125. Thus, four surfaces of each of the battery cells 110 that are arranged in a row may be confined by the restrainer 125 and the end plate 126, thereby efficiently preventing expansion of the battery cell 110.

The restrainer 125 is formed to have a structure having a rectangular edge shape, which has an opening that surround two lateral surfaces and one end portion of the battery cells 110 that are arranged in a row. The end plate 126 is disposed at the other end portion of the battery cells 110 that are arranged in a row. Flange portions 126a having a wing shape are formed on two lateral surfaces of the end plate 126. The flange portions 126a of the end plate 126 are connected to end portions of the restrainer 125 through a coupling member 127 while the flange portions 126a and end portions of the restrainer 125 overlap with each other.

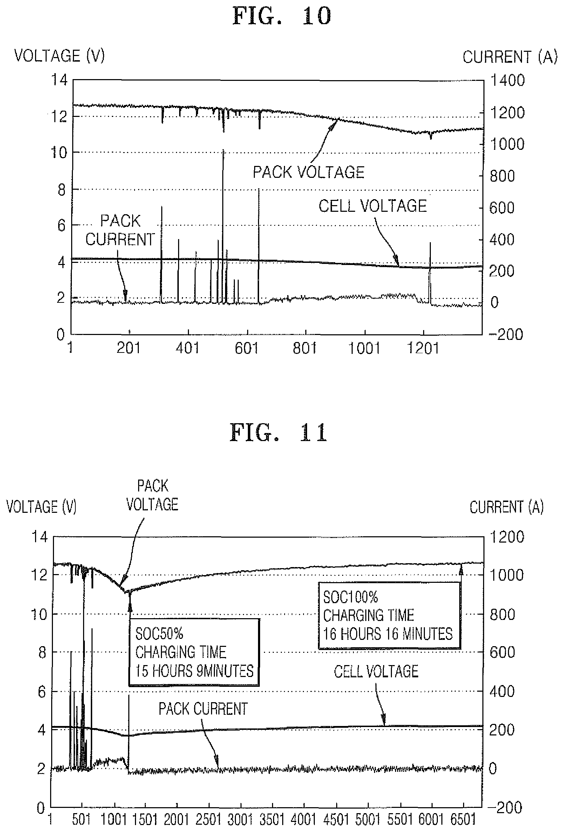

FIGS. 10 and 11 are graphs for showing experiment results obtained by evaluating charging properties before and after an engine is started when the battery pack 100 is used, according to an embodiment of the present invention.

In the engine-starting test of FIG. 10, a current (a pack current) of the battery unit 105, a voltage (a pack voltage) of the battery unit 105, and a voltage (a cell voltage) of the battery cells 110 were measured whenever an engine is started up 11 times. Whenever the engine is started up, the current (a pack current) of the battery unit 105, that is, a discharging current is instantly supplied to the starter motor 220 to exhibit a waveform having a pulse shape. A voltage of the battery unit 105 is instantly lowered. After the engine is started up, charging power is supplied through the generating module 210 so that a voltage of the battery unit 105 is recovered. As a time passes, a voltage of the battery unit 105 is gradually lowered. This is because, after the engine is started up, the generating module 210 is stopped and the battery unit 105 is discharged, in order to perform a charging test of FIG. 11.

In the charging test of FIG. 11, while a state of charge (SOC) is fully charged from 50% to 100%, a current (a pack current) of the battery unit 105, a voltage (a pack voltage) of the battery unit 105, and a voltage (a cell voltage) of the battery cells 110 were measured. With regard to the current (pack current) of the battery unit 105, it is confirmed that the current may be fully charged while a constant charging current is supplied and a time from 50% of SOC to 100% may be obtained. In the charging test, in order to evaluate the charging properties, the charging test is performed when the battery unit 105 is intentionally discharged to 50% of SOC. During start-up of a general engine, after the engine is started up, as the generating module 210 is operated, the battery unit 105 may be rapidly charged.

While the present invention has been particularly shown and described with reference to embodiments thereof, it will be understood by one of ordinary skill in the art that various changes in form and details may be made therein without departing from the scope of the present invention as defined by the following claims.

## Claims

1. A battery pack comprising:
first and second terminals (P₁, P₂);
a rechargeable battery (105) connected between first and second terminals (P₁, P₂), wherein the first and second terminals (P₁, P₂) are connected to a starter motor (220) and a generating module (210);
a charging path of the battery formed between the first terminal (P₁) and the battery (105), wherein the charging path comprises a first current limiter (158), wherein the first current limiter (158) is configured to control charging power to the battery to prevent over-charging of the battery by converting a voltage applied from the generating module (210) into a voltage level required by the battery unit (105), wherein the first current limiter (158) is configured to limit the discharging current of the battery and includes a plurality of diodes connected in series configured to allow charging current to have a forward direction and allow discharging current to have a reverse direction; and
a discharging path of the battery connected in parallel to the first current limiter (158) between the first terminal (P₁) and the battery, wherein the discharging path (158) bypasses the first current limiter (158) and comprises a second current limiter (157) configured to limit the charging current of the battery and including a plurality of diodes connected in parallel configured to allow discharging current to have a forward direction and allow charging current to have a reverse direction.

2. A power supplier for starting up an engine under an idle stop & go (ISG) system, comprising:
a battery pack according to any one of the preceding claims;
a generating module (210); and
a starter motor (220),
wherein the first and second terminals are connected in parallel to the generating module (210) and the starter motor (220),
wherein the starter motor (220) is configured to provide starting power for starting up an engine from discharging power supplied from the battery through the first and second terminals, and
wherein the generating module (210) is configured to convert mechanical energy into electrical energy during an operation of the engine to supply charging power to the battery through the first and second terminals.

## Patentansprüche

1. Batteriepack, umfassend:
erste und zweite Anschlüsse (P₁, P₂);
eine wiederaufladbare Batterie (105), welche zwischen einem ersten und einem zweiten Anschluss (P₁, P₂) verbunden ist, wobei der erste und der zweite Anschluss (P₁, P₂) mit einem Anlassermotor (220) und einem Generatormodul (210) verbunden sind;
einen Ladepfad der Batterie, welcher zwischen dem ersten Anschluss (P₁) und der Batterie (105) gebildet wird, wobei der Ladepfad einen ersten Strombegrenzer (158) umfasst, wobei der erste Strombegrenzer (158) dazu konfiguriert ist, die Ladeleistung der Batterie zu steuern, um Überladen der Batterie zu verhindern, indem er eine von dem Generatormodul (210) angelegte Spannung in einen von der Batterieeinheit (105) benötigten Spannungspegel umwandelt, wobei der erste Strombegrenzer (158) dazu konfiguriert ist, den Entladestrom der Batterie zu begrenzen, und eine Vielzahl von in Serie geschalteten Dioden beinhaltet, welche dazu konfiguriert sind, Ladestrom zu erlauben, eine Vorwärtsrichtung aufzuweisen und Entladestrom zu erlauben, eine Rückwärtsrichtung aufzuweisen; und
einen Entladepfad der Batterie, welcher zu dem ersten Strombegrenzer (158) zwischen dem ersten Anschluss (P₁) und der Batterie parallel geschaltet ist, wobei der Entladepfad (158) den ersten Strombegrenzer (158) überbrückt und einen zweiten Strombegrenzer (157) umfasst, welcher dazu konfiguriert ist, den Ladestrom der Batterie zu begrenzen, und eine Vielzahl von parallel geschalteten Dioden beinhaltet, welche dazu konfiguriert sind, Entladestrom zu erlauben, eine Vorwärtsrichtung aufzuweisen und Ladestrom zu erlauben, eine Rückwärtsrichtung aufzuweisen.

2. Stromversorger zum Anlassen eines Motors unter einem Idle Stop & Go (ISG)-System, umfassend:
ein Batteriepack nach einem der vorstehenden Ansprüche;
ein Generatormodul (210); und
ein Anlassermotor (220),
wobei der erste und zweite Anschluss zu dem Generatormodul (210) und dem Anlassermotor (220) parallel geschaltet sind,
wobei der Anlassermotor (220) dazu konfiguriert ist, Anlassleistung zum Anlassen eines Motors durch Entladestrom aus der Batterie über den ersten und zweiten Anschluss bereitzustellen, und
wobei das Generatormodul (210) dazu konfiguriert ist, während des Betriebs des Motors mechanische Energie in elektrische Energie umzuwandeln, um Ladeleistung über den ersten und zweiten Anschluss an die Batterie zu liefern.

## Revendications

1. Bloc-batterie comprenant :
une première et une deuxième bornes (P₁, P₂) ;
une pile rechargeable (105) connectée entre les première et deuxième bornes (P₁, P₂), dans lequel les première et deuxième bornes (P₁, P₂) sont connectées à un moteur de démarreur (220) et à un module générateur (210) ;
un chemin de charge de la batterie formé entre la première borne (P₁) et la batterie (105), dans lequel le chemin de charge comprend un premier limiteur de courant (158), dans lequel le limiteur de courant (158) est configuré pour commander la puissance de charge de la batterie afin d'éviter sa surcharge en convertissant une tension appliquée par le module générateur (210) en un niveau de tension requis par l'unité de batterie (105), dans lequel le premier limiteur de courant (158) est configuré pour limiter le courant de décharge de la batterie et inclut une pluralité de diodes connectées en série configurées pour permettre au courant de charge de présenter un sens direct et au courant de décharge de présenter un sens inverse ; et
un chemin de décharge de la batterie connecté en parallèle au premier limiteur de courant (158) entre la première borne (P₁) et la batterie, dans lequel le chemin de décharge (158) contourne le premier limiteur de courant (158) et comprend un deuxième limiteur de courant (157) configuré pour limiter le courant de charge de la batterie et incluant une pluralité de diodes connectées en parallèle configurées pour permettre au courant de décharge de présenter un sens direct et permettre au courant de charge de présenter une direction inverse.

2. Générateur d'alimentation pour le démarrage d'un moteur soumis au système stop & go (ISG), comprenant :
un bloc-batterie selon l'une quelconque des revendications précédentes ;
un module générateur (210) ; et
un moteur de démarreur (220) ,
dans lequel les première et deuxième bornes sont connectées en parallèle au module générateur (210) et au moteur de démarreur (220),
dans lequel le moteur de démarreur (220) est configuré pour fournir une puissance de démarrage nécessaire au démarrage d'un moteur en déchargeant l'énergie fournie par la batterie via les première et deuxième bornes, et
dans lequel le module générateur (210) est configuré pour convertir l'énergie mécanique en énergie électrique pendant le fonctionnement du moteur afin de fournir une puissance de charge à la batterie par l'intermédiaire des première et deuxième bornes.
